# EUROPEAN PATENT APPLICATION

(11) **EP 1 150 124 A2**
(43) Date of publication of application: **31.10.2001**
(21) Application number: 01109935.5
(22) Date of filing: 24.04.2001
(51) Int. Cl.: G01P 1/02, B66F 9/075

(54) **Rotation detector in reach cargo vehicle and wheel for reach cargo vehicle**

(30) Priority: 25.04.2000 JP 2000124333
(71) Applicant: Kabushiki Kaisha Toyoda Jidoshokki Seisakusho, Aichi-ken (JP)
(72) Inventor: Otsuka, Haruhiko, 2-1, Toyoda-cho, Kariya-shi, Aichi-ken (JP)
(74) Representative: Leson, Thomas Johannes Alois, Dipl.-Ing.

(57) **Abstract**

Reach rails (21) extend forward from a body of a reach forklift truck. An axle (31) is fixed to outer walls of reach rails (21). Front wheels (11) are supported by the axle (31). Protrusions (34a) are formed on the side of the wheel (34) at a constant pitch. A guard (40) is attached to the lower surface of each reach rail (21). A sensor (30) is protected by the guard (40) from objects on the floor surface. The sensor (30) detects the number of revolution of the front wheel (11) based on passage of the protrusions (34a). The sensors (30) are positioned substantially within the dimensions of the reach rail (21). Therefore, if the front wheels (11) are non-powered wheels, parts for transmitting the front wheel (11) need not be added near the front wheel (11), thereby simplifying the structure for detecting the rotation of the front wheels (11).

## Description

### BACKGROUND OF THE INVENTION

The present invention relates to a rotation detector for detecting the number of revolutions (rotational speed) of front wheels in a reach cargo vehicle such as a reach forklift truck, and a wheel for such a reach cargo vehicle. More particularly, the present invention relates to a rotation detector which comprises a sensor and a detectable portion rotated integrally with front wheels and detected by the sensor, and a wheel which comprises the detectable portion.

Generally, a reach forklift truck has a pair of reach legs, which extend forward from a vehicle body. Each of the reach legs includes a reach rail. A mast assembly, which functions as a cargo carrying apparatus, is movable forward and backward along a pair of reach rails. Reach forklift trucks include a tricycle type forklift truck which includes one rear wheel and two front wheels. The rear wheel is used for driving and steering the wheels. Generally, a forklift truck additionally includes an auxiliary wheel (caster wheel) adjacent to a rear wheel, regardless of whether it is a tricycle type forklift truck. Each of the front wheels is supported by an axle secured to a side wall of an associated reach rail.

In recent years, an anti-skid brake system (ABS) or a traction control (TRC) have been employed in automotive vehicles, whereas neither ABS nor TRC have been employed in cargo carrying vehicles such as a forklift truck. However, it is desirable to employ this type of control in forklift trucks to ensure stability and prevent skid marks on the floor of a factory due to skidding and locking of tires.

Japanese Unexamined Patent Publications Nos. Hei 6-191250, Hei 6-191251, Hei 10-297900 disclose forklift trucks that have a turn stabilization control, which locks a suspension function based on a signal indicative of a detected turning action of a vehicle body so that the vehicle body does not incline either too far to the left or to the right when the vehicle body turns.

Generally, a reach forklift truck detects the rotation of a drive motor for driving a drive wheel to detect the vehicle speed. However, for implementing a variety of controls as mentioned above, detection of rotating of front wheels is desirable in some cases.

For example, when ABS or TRC is employed, locked or skidding drive wheels can be detected by a difference in rotational speed between a drive wheel and a follower wheel (non-powered wheels). Also, when the turn stabilization control is employed, the turning state of a vehicle can be detected by a difference in rotational speed between a rear wheel and a front wheel or a difference in rotational speed between right and left wheels. The detection of the front wheel rotation is advantageous for a variety of controls mentioned above.

Japanese Unexamined Patent Publication No. Hei 6-191250 discloses a reach forklift truck, which is equipped with a sensor for detecting rotation of front wheels. As shown in Fig.21, the reach forklift truck 91 of this publication is a three-wheel drive vehicle in which a pair of front wheels 92 is powered. Each of the front wheels 92 is supported by one of a pair of reach rails 95. The driving force of a motor 96 is transmitted to the front wheels 92 through a gear box 97. A sensor 94 is located in the gear box 97 for detecting rotation of gears in the gear box 97.

A sensor for detecting rotation of the wheels is mainly used to (a) detect the vehicle speed, and (b) control the speed of the motor for driving the drive wheels. The sensor detects the rotational speed of a rotor, such as a gear for transmitting the driving torque, or the rotational speed of the motor to indirectly detect the rotational speed of the drive wheels. The rotational speed of the drive wheels is detected, but the rotational speed of a follower wheel is not detected for any of the purposes (a), (b). There has never been a reach forklift truck equipped with a sensor for detecting the rotation of front wheels when the front wheels are non-powered follower, or coasting wheels.

When front wheels are follower wheels, the front wheels are rotatably supported by axles that are fixed to the outer sides of reach rails, respectively. This structure lacks an object, the rotation of which can be detected, such as a gear box, a motor or the like near the front wheels. It is therefore necessary to modify the structure near the front wheels, for example, by adding parts for transmitting the rotation of the front wheels such as gears near the front wheels to detect the rotation of the front wheels.

Also, a sensor must be located near a front wheel for detecting the rotation of the front wheel. However, the positioning of a sensor near a front wheel is inappropriate due to the following problems.

Locations near a front wheel are quite close to the floor surface. For this reason, the sensor may contact an obstacle on the road while the vehicle is running, resulting in damage to the sensor.

When a sensor is positioned outside a front wheel for permitting the rotational speed to be detected from outside of the front wheel, the width of the forklift truck is increased. Currently, the width of the forklift truck is slightly less than the width of a pallet. Further increasing the width due to the addition of the sensor would lead to difficulties in removing a pallet that is sandwiched between and placed behind two pallets and difficulties in passing through a space as narrow as a pallet. This would significantly reduce the efficiency of cargo transportation.

There is only a small gap between a fork of a mast assembly between right and left reach rails and a reach rail. Therefore, if a sensor is positioned inside a front wheel and protrudes toward the fork from the side surface of the reach rail, the forks may interfere with the sensor if they swing horizontally.

To solve the above problems, appropriate expedients are required for a position in which the sensor is attached and a method of attaching the sensor.

In addition to the above problems, the following problem also remains unsolved.

A foreign object such as a rope may be wound around an axle of front wheels. If a majority of sensor protrudes into a gap between a reach rail and the front wheel, the foreign object wound around the axle may also be wound around the sensor and cause a displacement of the sensor position. This displacement of the sensor may reduce the detection accuracy of the sensor and cause erroneous detection.

### SUMMARY OF THE INVENTION

It is an object of the present invention to provide a simple rotation detector and a wheel for use in a reach cargo vehicle that does not require additional parts near a front wheel, even when the front wheel is a non-powered wheel.

It is another object of the present invention to provide a rotation detector for use in a reach cargo vehicle that does not increase the existing width of the vehicle.

It is still another object of the present invention to provide a higher accurate sensor.

To satisfy the objects, a rotation detector for a reach cargo vehicle is provided. The reach cargo vehicle includes a cargo carrying apparatus, a vehicle body, and a pair of reach legs extending from the vehicle body. Each of the reach legs has a reach rail. The cargo carrying apparatus is movable along the pair of reach rails. A pair of front wheels is rotatably supported by an axle at the outside of the reach rails, respectively. The rotation detector is characterized by a sensor and a detectable object. The sensor is attached to at least one of the reach legs. The detectable object is formed on at least one front wheel to rotate integrally with the front wheel. The detectable object is detected by the sensor to determine the rotational speed of the front wheel.

A wheel for use in a reach cargo vehicle is also provided. The vehicle includes the wheel, and a sensor located near the wheel. The wheel is characterized by detectable objects made of a metal and arranged on an side or an internal circumferential wall of the wheel at a constant pitch in a circumferential direction. The detectable objects are detected by the sensor to determine a rotational speed of a front wheel.

Other aspects and advantages of the invention will become apparent from the following description, taken in conjunction with the accompanying drawings, illustrating by way of example the principles of the invention.

### BRIEF DESCRIPTION OF THE DRAWINGS

The invention, together with objects and advantages thereof, may best be understood by reference to the following description of the presently preferred embodiments together with the accompanying drawings in which:
Fig. 1 is a left side view of a rotation detector for detecting the rotational speed of front wheels in one embodiment;
Fig. 2 is a front sectional view illustrating the rotation detector of Fig. 1;
Fig. 3 is an exploded perspective view illustrating how a rotational speed sensor is attached;
Fig. 4 is a front view for illustrating how a hydraulic pipe is routed for a brake device;
Fig. 5 is a perspective view for illustrating the action of a cutter;
Fig. 6 is a partial front view of a reach forklift truck;
Fig. 7 is a side view of the reach forklift truck;
Fig. 8 is a plan view of the reach forklift truck;
Fig. 9 is a front sectional view of a rotation detector in another embodiment;
Fig. 10 is a partial left side view of a rotation detector in another embodiment;
Fig. 11 is a partial left side view of a rotation detector in still another embodiment;
Fig. 12 is a partial left side view of a rotation detector in a further embodiment;
Fig. 13 is a partial left side view of a rotation detector in a further embodiment;
Fig. 14A is a partial left side view illustrating a rotation detector in a further embodiment;
Fig. 14B is a partial left plan sectional view of the rotation detector in Fig. 14A;
Fig. 15 is a front sectional view of a rotation detector in a further embodiment;
Fig. 16A is a partial left side view illustrating a rotation detector in a further embodiment;
Fig. 16B is a front sectional view of the rotation detector in Fig. 16A;
Fig. 17A is a partial left side view of a rotation detector in a further embodiment;
Fig. 17B is a side view illustrating a rotation detector in a further embodiment;
Fig. 18 is an exploded perspective view of a front wheel having a metal detectable portion in a further embodiment;
Fig. 19A is an exploded perspective view illustrating a front wheel in a further embodiment;
Fig. 19B is a partial enlarged front sectional view of the front wheel in Fig. 19A;
Fig. 20 is a side view of a front wheel in a further embodiment; and
Fig. 21 is a plan view of a prior art reach forklift truck.

### DETAILED DESCRIPTION OF THE PREFERRED EMBODIMENTS

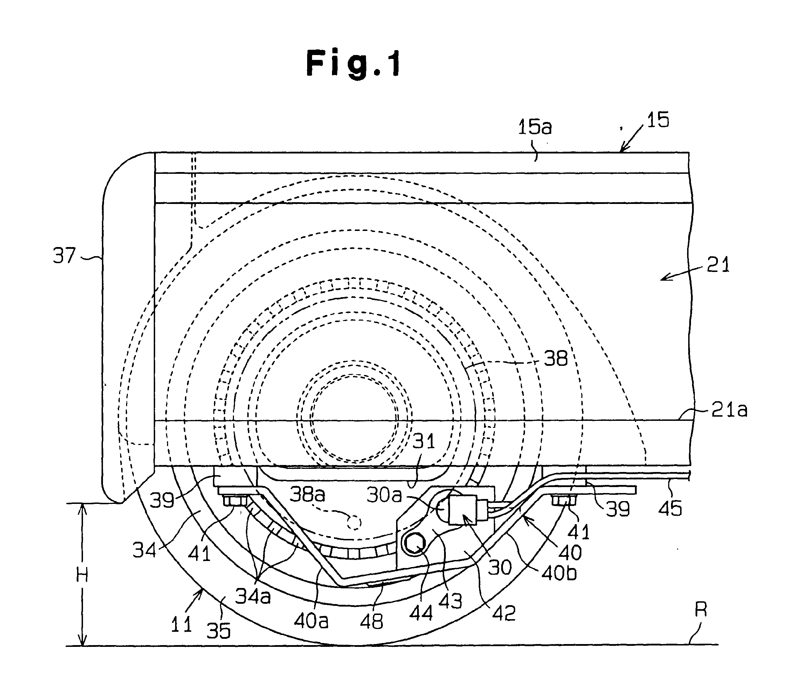

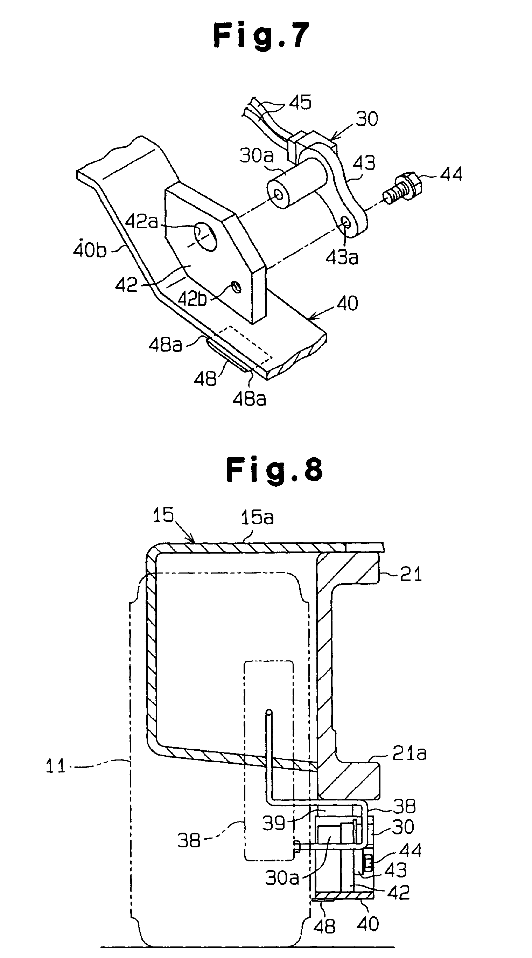

One embodiment of the present invention will be described with reference to Figs. 1 through 8.In Fig. 8, the left side is the front, the upper side is right, and the lower side is left.

As illustrated in Figs. 7 and 8, the reach forklift truck 10, which is a reach cargo vehicle, is a three-wheel type forklift truck that has two front wheels and one rear wheel. The front wheels 11 are follower wheels, while the rear wheel is a drive wheel 12 which also serves as a steering wheel. The drive wheel 12 is offset to the left from the longitudinal axis, while casters 13 (illustrated in Fig. 8) are offset to the right. A pair of reach legs 15 extends from a front portion of a vehicle body 14. The front wheels 11 are attached to front ends of the reach legs 15, respectively. A reach rail 21 is located at the inside of each of the reach legs 15 such that they oppose each other.

On the rear right side of the vehicle body 14, a stand-type driver's space 16 is provided. An instrument panel 17 is located in front of the driver's space 16. The instrument panel 17 has cargo handling levers 18 including a search lever, a lift lever, a tilt lever and others, and an accelerator lever 18A. A container box 14A rises on the rear left side of the vehicle 14, and a steering wheel 19 is provided on the top surface of the container box 14A.

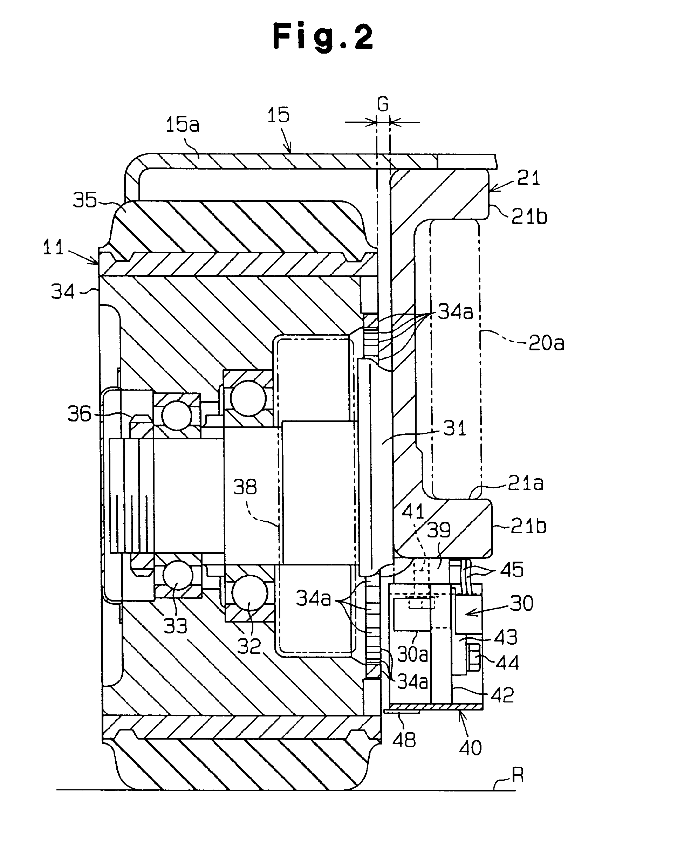

The cargo carrying apparatus includes a mast assembly 20, forks 24, and a lift bracket 25. The mast assembly 20 is coupled to a piston rod 22a of a reach cylinder 22 (illustrated in Fig. 7), which is hydraulically driven, below the vehicle body 14. As the reach lever is operated in the cargo handling levers 18, a hydraulic fluid is supplied or discharged to the reach cylinder 22 through an oil control valve 23 (illustrated in Fig. 7) to extend or withdraw the reach cylinder 22. The mast assembly 20 is thus equipped for forward and backward movement relative to the vehicle body 14 along the reach rails 21. The mast assembly 20 has a plurality of right and left rollers 20a (see Fig. 2) attached to a lower portion thereof. The rollers 20a roll on the reach rails 21 to cause the mast assembly 20 to move forward or backward within a predetermined stroke range. A lift bracket 25 is attached to the mast assembly 20 for supporting the forks 24. As the lift lever is operated, the lift cylinder 26 is expanded or withdrawn, which causes the lift bracket 25 to rise or fall.

As illustrated in Fig. 7, a drive motor 27 is located in the container box 14A for driving the drive wheel 12. A sensor 28 detects rotation of the drive motor 27. A control unit 29, which is located in the vehicle body 14, detects the rotational speed, i.e., the vehicle speed of the drive wheel 12, based on a signal from the sensor 28.

This embodiment includes right and left sensors 30 for detecting the rotational speeds of the right and left front wheels 11, i.e., the follower wheels, as illustrated in Fig. 8, in addition to the sensor 28 for detecting the rotational speed of the drive wheel 12. Both sensors 30 are electrically connected to the control unit 29, so that the control unit 29 calculates the rotational speeds of the corresponding front wheels 11 based on input signals from the respective sensors 30. The control unit 29 uses the rotational speeds of the front wheels 11 to perform a variety of controls such as ABS control and turn stabilization control.

Next, the structure of the rotation detector will be described in detail with reference to Figs. 1 through 5. Since the parts of the rotation detector associated with each front wheel 11 are the same, only one side (the right side) will be described below.

As illustrated in Fig. 2, the front wheel 11 is attached to an axle 31 secured to an outer wall of the reach rail 21 through two bearings 32, 33. The front wheel 11 is prevented from coming off by a lock bolt 36 threaded into a distal end portion of the axle 31. The front wheel 11 has a wheel 34 made of a metal (for example, an iron-based metal), and a tire 35 made of rubber or urethane fitted on the outer peripheral surface of the wheel 34. The bearings 32, 33 are fitted in the internal accommodating space of the wheel 34. The right (right side surface) of the wheel 34 is formed with a rugged surface made of a metal by casting or forging along the circumferential direction. In this embodiment, the rugged surface includes a large number of protrusions 34a arranged at a constant pitch in the circumferential direction, and the protrusions 34a function as objects detected by the sensor 30. The sensor 30 and the protrusions 34a together constitute the rotation detector. The control unit 29 stores the number of protrusions 34a on the inner side, and determines that the front wheel 11 is rotated when the time the number of protrusions 34a detected by the sensor 30 reaches the stored number. Therefore, when the front wheel 11 is rotated, the rotational speed of the wheel 11 can be measured by counting the protrusions 34a. For this reason, unlike the prior art example, the measurement of the rotation of the front wheel 11 does not require parts such as gears and so on located near the front wheel 11. The reach rail 21 is located relative to the inner side of the front wheel 11 with a slight gap G therebetween. In this embodiment, the reach rail 21 functions as a structural element.

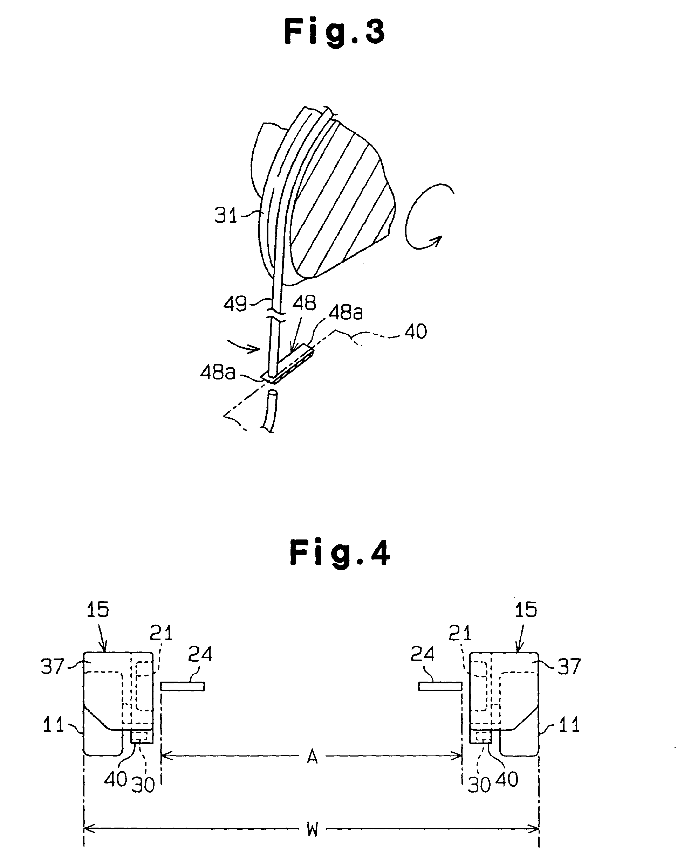

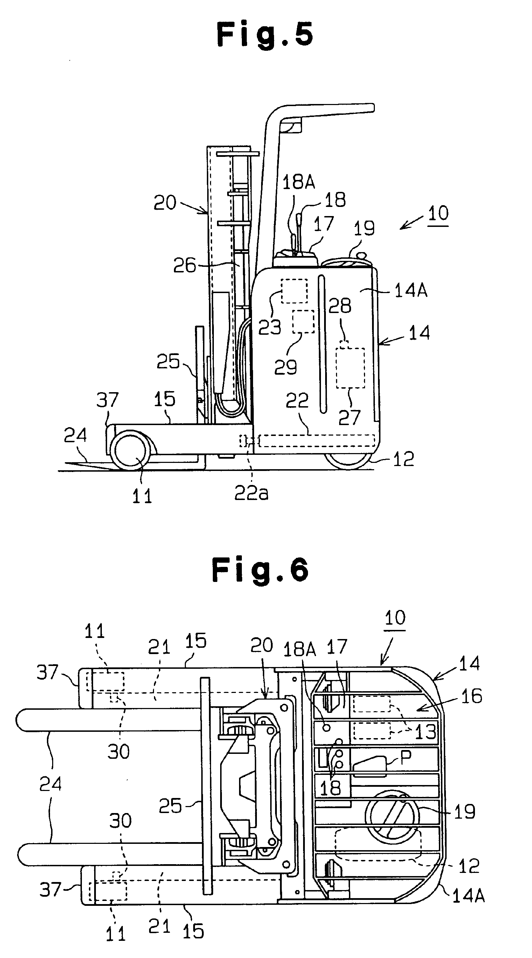

The reach leg 15 includes the reach rail 21, and a leg housing 15a, which covers the outside of the reach rail 21. The reach leg 15 defines an inner space (see Fig. 4) extending in the longitudinal direction. The outer surface of the front wheel 11 is substantially in the plane of the outer surface of the leg housing 15a or the outer surface of the front wheel 11 is positioned slightly outside from the outer surface of the leg housing 15a. As illustrated in Fig. 6, the width W of the forklift truck 10 is determined by the position of the front wheels 11, and the sensors 30 do not change the width W, since they are attached to the inside of each front wheel 11. As illustrated in Fig. 1, a tire cover 37 is attached to a front end portion of the leg housing 15a.

As illustrated in Figs. 2 and 4, an auxiliary brake device 38, which is a hydraulic drum brake device, is attached to the axle 31 in the internal accommodating space of the wheel 34. As illustrated in Fig. 4, a hydraulic pipe line 38a extending from the brake device 38 is connected to a brake valve unit (not shown) in the vehicle body 14 through the inner space within the reach leg 15 for supplying a hydraulic oil to a wheel cylinder (not shown) of the brake device 38. The brake valve unit contains an electromagnetic valve, which is controlled by the control unit 29. The brake device 38 is mainly used for the ABS control. The control unit 29 controls the brake device 38 based on a release operation on a deadman type brake pedal P (illustrated in Fig. 8) or a switch-back (return) operation on the accelerator lever 18A.

As illustrated in Fig. 1, on the lower surface of the reach rail 21, a pair of bosses 39 are welded such that they oppose the front wheel 11. A guard 40 is fixed to the lower surface of the reach rail 21 by screwing two bolts 41, as fasteners, into the bosses 39. Heads of the bolts 41 are positioned such that they do not substantially extend downward into a range of a height H from a floor surface R to a lower end of the tire cover 37. This is intended to prevent an obstacle passing below the tire cover 37 from colliding with the heads of the bolts 41 to damage the bolts 41.

The guard 40 is formed of a metal plate, which is bent into an inverted arch shape. The guard 40 has a pair of inclined portions 40a, 40b, which are inclined at a predetermined angle to the floor surface R, and a center bottom portion 40c between the inclined portions 40a, 40b.

In this embodiment, the guard 40 also functions as a bracket for attaching the sensor 30. Specifically, the sensor 30 is mounted to a plate-shaped bracket 42 using a single bolt 44. The bracket 42 is welded on the center bottom portion 40c of the guard 40 such that the bracket 42 extends upward from the center bottom portion 40c.

The following is a detailed description of the attachment of the sensor. As illustrated in Fig. 3, the sensor 30 is an integrated type, which has a cylindrical sensor portion 30a fixed to one end of an attachment bracket 43. The attachment bracket 43 is formed with a throughhole 43a at one end. The bracket 42 is formed with an assembling hole 42a, through which the sensor portion 30a can be inserted, and a threaded hole 42b. The sensor 30 is mounted to the bracket 42 by inserting the bolt 44 through the throughhole 43a and threading the bolt 44 into the threaded hole 42b, with the sensor portion 30a fitted in the assembling hole 42a. From a base of the sensor portion 30a, two signal conductors 45 extend. The signal conductors 45 are routed within the reach leg 15 along the lower surface of the reach rail 21 and connected to the control unit 29, with the sensor 30 mounted to the bracket 42, as illustrated in Figs. 1 and 2.

The sensor 30 is located in a position where it can detect information related to the protrusions 34a. As illustrated in Fig. 2, since the sensor 30 is positioned below a guide surface 21a of the reach rail 21, the sensor 30 will never interfere with the course of the roller 20a.

The sensor 30 is a magnetic sensor (for example, a Hall element) of a type which detects magnetic disturbance, which occurs when a magnetic material passes the front surface of the sensor 30, and outputs a signal corresponding thereto. The sensor 30 outputs one pulsed signal each time a protrusion 34a passes in front of the sensor 30. The control unit 29 counts the number of pulses in the signal sent from the sensor 30, and calculates the rotational speed of the front wheel 11 from the number of input pulses per unit time.

The guard 40 further functions to protect the front, rear and bottom of the sensor 30 with its inclined portions 40a, 40b and center bottom portion 40c. For example, the sensor 30 is protected by the guard 40 from obstacles (for example, stones, wood pieces, and so on) on the floor surface when the forklift truck 10 is running. Both inclined portions 40a, 40b are inclined such that they are closer to each other toward their lower portions. Since the guard 40 is inclined with respect to the running direction (floor surface R) in the manner described above, an impact given to the guard 40 by an obstacle can be distributed in the directions along the inclined surfaces of the inclined portions 40a, 40b. Particularly, when the guard 40 also functions as an attachment bracket, repetitive collisions of the guard 40 with obstacles may result in deformation of the guard 40. The deformed guard 40 may shift the position of the sensor 30 to adversely affect the accuracy in detecting the rotational speed. Thus, the structure for distributing an impact force as mentioned above is preferred.

Also, as illustrated in Fig. 2, the sensor 30 is positioned substantially within the lateral dimensions of the reach rail 21. This positioning prevents a foreign object such as a rope wound around the axle 31 between the front wheel 11 and the reach rail 21 from reaching the sensor 30. Actually, the outer surface of the sensor portion 30a protrudes slightly outward from the outer surface of the reach rail 21 in such a degree that a foreign object is not wound (e.g. 1 to 2 mm). In association, the guard 40 also protrudes slightly outward from the outer surface of the reach rail 21 such that the sensor 30 can be fully protected thereby over the entire vehicle width direction. The sensor 30 and the front wheel 11 are spaced apart by such a distance that allows a foreign object wound around the axle 31 to pass.

The gap G between the front wheel 11 and the reach rail 21 is 2 mm or more in design dimension, and in a range of 3 to 6 mm, for example, in this embodiment. The gap G is narrow and is set such that the front wheel 11 does not come in contact with the reach rail 21 due to variations within the manufacturing tolerance of assembling parts. In this embodiment, for meeting the foregoing conditions related to the sensor 30, the distance between the sensor portion 30a and the protrusions 34a is set in a range of 2 to 5 mm. A sensor which contains a Hall element is suitable for use as the sensor 30 since it ensures a detection allowable distance of 2 mm or more.

Also, the sensor 30 is attached such that it will not interfere with the fork 24 coupled to the mast assembly 20 when the fork 24 swings to the left or right. When the fork 24 is at a height corresponding to the reach leg 15, an inner wall 21b of the reach rail 21 functions as a restricting surface to restrict a left or right swing motion of the fork 24. The sensor 30 is positioned within inner wall 21b in the lateral direction (to the left of the wall 21b in Figure 2). Since the sensor 30 does not protrude inside (on the right side in the figure) from the inner wall 21b of the reach rail 21, the sensor 30 does not affect the positioning range A (see Fig. 6) of the forks 24.

Alternatively, the inner side of the guard 40 may function as the restricting surface for the fork 24, in which case the sensor 30 may protrude slightly inside from the inner wall surface 21b of the reach rail 21 together with the guard 40. In this event, however, the positioning range A of the fork 24 should be reduced such that the fork 24 does not touch the sensor 30 even if it swings to the left or right.

As illustrated in Figs. 1 through 3, the guard 40 includes a cutter 48 for cutting a foreign object such as a rope wound around the axle 31. As illustrated in Figs. 2, 3 and 5, the cutter 48 is fixed on the lower surface of a bottom portion of the guard 40 such that it protrudes into the gap G between the guard 40 and the front wheel 11. The cutter 48 is a type having knife edges on both sides, with two knife edge portions 48a consisting of a front knife edge and a rear knife edge extending along the vehicle width direction. A rope 49 wound around the axle 31 is cut with the cutter 48. The guard 40 is open to the front wheel 11, and the hydraulic pipe line 38a of the brake device 38 passes through a space between the guard 40 and the reach rail 21, and routed while protected by the guard 40, as illustrated in Fig. 4.

In regard to the ABS control, the sensor 30 is used to determine whether or not the brake device 38 is actuated. The control unit 29 calculates the vehicle speed of the drive wheel 12 (drive wheel vehicle speed) and the vehicle speed of the front wheels 11 (follower wheel vehicle speed) based on the number of input pulses per unit time sent from the sensors 28, 30. The control unit 29 calculates the difference between converted vehicle speed at the position of the rear wheel from the follower wheel vehicle speed and the drive wheel vehicle speed to find a slipping speed of the drive wheel 12. If the slipping speed exceeds a threshold value, the control unit 29 determines that the drive wheel 12 is slipping. For example, an average value of the numbers of input pulses from the right and left sensors 30 is used to calculate the vehicle speed of the front wheels 11. When slipping of the drive wheel 12 is detected, the control unit 29 opens the electromagnetic valve of the brake valve unit (not shown) to actuate the brake device 38. Subsequently, the front wheels 11 are braked for restraint such that the braking distance of the forklift truck 10 is not too long. Detected values of the right and left sensors 30 are also used for the turn stabilization control. Specifically, the control unit 29 measures the difference in rotational speed between the right and left front wheels 11 and the vehicle speed based on the numbers of input pulses from the right and left sensors 30 per unit time and estimates lateral acceleration, which acts in the right and left directions of the vehicle body 14, based on these measured values. Then, if the estimated lateral acceleration exceeds a threshold value, the control unit 29 closes the electromagnetic valve (not shown) and locks a lock cylinder (hydraulic cylinder) to lock a suspension mechanism, thereby restricting rolling of the vehicle body 14.

According to this embodiment described above in detail, the following advantages are provided.

A large number of protrusions 34a are integrally formed on the inner side of the front wheel 11 at a constant pitch in the circumferential direction, as objects to be detected by the sensor 30. They are suitable for detecting the rotational speed of the front wheel 11 which is a follower wheel. The sensor 30 attached to the reach leg 15 (reach rail 21) can directly detect the rotational speed of the front wheel 11 based on the protrusions 34a. This eliminates the need for positioning parts such as gears near the front wheel 11, and simplifies the structure of the rotation detector.

Since the sensor 30 is positioned at the outside of the inner wall 21b of the reach rail 21 in the lateral direction, the positioning range A of the fork 24 is not reduced. This reduces the likelihood of an impact to the sensor 30 applied by a foreign object, which interferes with the sensor 30, such as a rope wound around the axle 31. It is therefore possible to prevent the sensor 30 from being moved, which maintains high detection accuracy.

In addition, as illustrated in Fig. 5, a foreign object such as a rope wound around the axle 31 is cut by the cutter 48, thereby avoiding problems resulting from the foreign object. Thus, a high detection accuracy of the sensor 30 can be maintained for a long term.

The rotation sensor 30 is surrounded by the guard 40. Therefore, while the vehicle is running, the sensor 30 is protected from obstacles on the floor surface R.

Since the inclined portions 40a, 40b are inclined with respect to the floor surface R, it is possible to distribute an impact force applied by an obstacle on the floor surface R to the guard 40 when the former collides with the latter. As a result, the guard 40 is less susceptible to deformation, and the position of the sensor 30 is hardly shifted even if the guard 40 functions simultaneously as a bracket. Thus, a high detection accuracy of the sensor 30 is maintained.

Since the sensor 30 is attached to the lower surface of the reach rail 21, the signal conductors 45 can be routed through the guard 40 and along the lower surface of the reach rail 21. Therefore, the signal conductors 45 are protected from a contact with a movable object existing around the reach rail 21 such as the fork 24, a rope wound around the axle 31, if any, the roller 20a, and so on.

Since the guard 40 has an open side surface, the hydraulic pipe line 38a of the brake device 38 is routed through the inside of the guard 40. Even if the sensor 30 and the guard 40 are positioned near the inner side surface of the front wheel 11, the hydraulic pipe line 38a is drawn from the brake device 38 within a path protected in the guard 40. In other words, the guard 40 protects the hydraulic pipe line 38a from a location at which the hydraulic pipe line 38a is drawn out to the lower surface of the reach rail 21.

The head of the bolt 41 for fixing the guard 40 does not substantially protrude from the lower end of the tire cover 37. The bolt 41 is prevented from being damaged or broken by an obstacle which passes through below the tire cover 37.

The sensors 30 detect the number of revolutions of the front wheels 11, respectively. The timing at which the ABS control or turn stabilization control should be conducted is correctly determined by employing an average value of the rotational speeds of both front wheels 11, as an expedientially unified rotational speed of both front wheels 11, which takes into account the difference between the two rotational speeds. In addition to this, if the rotational speed of the rear wheel 12 is calculated, slippage of the drive wheel 12 is correctly detected, so that the brake device 38 is actuated as required. A lateral acceleration acting on the vehicle body 14 is indirectly detected by taking into account the difference in rotational speed and the vehicle speed, so that the turn stabilization control is conducted at an appropriate time.

A wheel for the front wheel suitable for use with the rotation detector, i.e., the wheel 11 formed with the metal protrusions 34a on the inner side thereof at a constant pitch in the circumferential direction, is provided.

It should be apparent to those skilled in the art that the present invention may be embodied in many other specific forms without departing from the spirit or scope of the invention. Particularly, it should be understood that the invention may be embodied in the following forms.

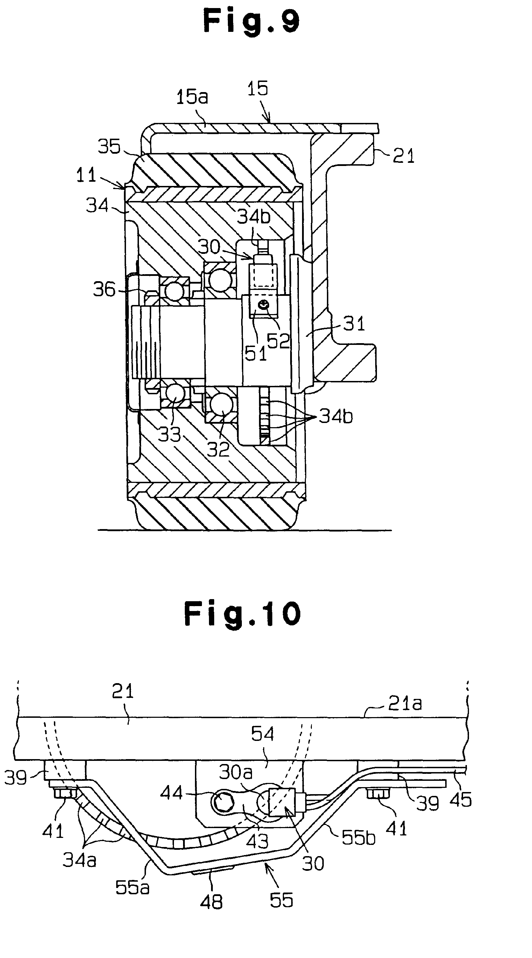

The position in which the sensor 30 is attached is not limited to the lower surface of the reach rail 21. As illustrated in Fig. 9, when the brake device 38 is not attached to the front wheel 11, the sensor 30 may be attached to the axle 31 in an internal accommodating space of the wheel 34. The sensor 30 is attached to the axle 31 by fastening an attachment bracket 51 integral with the sensor 30 onto the outer periphery of the axle 31 using a screw 52. The sensor 30 is positioned within the width of the front wheel 11 (within the width of the tire). The protrusions 34b as the detectable portion extend inward radially from the inside of a hollow cylindrical space formed within the wheel 34 at a constant pitch such that they oppose the sensor 30. The internal circumferential wall defines internal accommodating space. According to this structure, the sensor 30 is not interfered by the fork 24, and the sensor 30 is protected from a rope wound around the axle 31 and obstacles on the floor surface R. The guard 40 is not required.

The guard need not function as a bracket for attaching the sensor. As illustrated in Fig. 10, a bracket 54 with the sensor 30 attached thereto may be spaced apart from a guard 55. The bracket 54 is welded on the lower surface of the reach rail 21 (or may be fixed with bolts). The guard 55 is also fixed to the lower surface of the reach rail 21 with bolts 41. The guard 55 only functions to protect the sensor 30. Like the first embodiment, the guard 55 is a metal plate which is bent into an inverted arch sharp. Since inclined portions 55a, 55b of the guard 55 are inclined in the running direction, the guard 55 is less susceptible to deformation due to collision with an obstacle on the floor surface R. Also, even if the guard 55 were deformed, the deformed guard 55 would not interfere with the sensor 30 and would not cause a displacement of the sensor 30, so that a high detection accuracy of the sensor 30 is maintained.

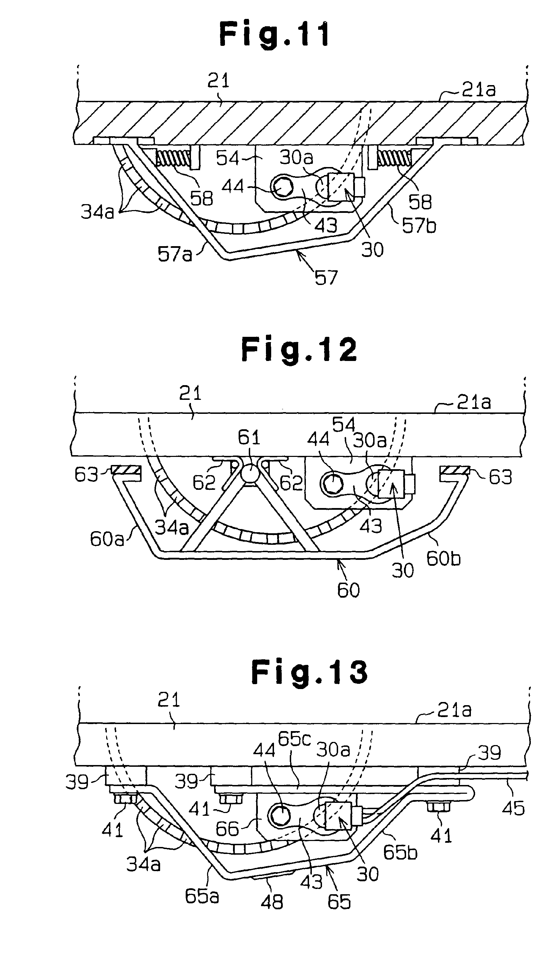

The guard may be arranged so that it is movable relative to the reach leg 15 (reach rail 21). As illustrated in Figs. 11 and 12, a guard 57 has a function of relaxing an impact force, making use of resilient forces of springs.

In Fig. 11, the guard 57 is arranged slidably in the running direction with respect to the reach rail 21. A pair of springs 58 positioned one in front of the other are attached to the lower surface of the reach rail 21. The guard 57 is urged by the springs 58 in opposite directions to each other. The guard 57 is positioned by the balance of the two urging forces. If an obstacle on the floor surface R collides with the guard 57, the guard 57 slides against the urging forces of the springs 58. Thus, an impact force applied to the guard 57 by the interference is absorbed by the springs 58.

In Fig. 12, a guard 60 is arranged swingably in a plane orthogonal to the vehicle width direction about a shaft 61. The shaft 61 is fixed to the lower surface of the reach rail 21. The guard 60 is urged by a pair of plate springs 62 in opposite directions to each other. The guard 60 is positioned by the balance of the two urging forces of both plate springs 62 with its front end portion and rear end portion spaced from the lower surface of the reach rail 21. If an obstacle on the floor surface R collides with the guard 60, the guard 60 pivots against the urging forces of the plate springs 62, thereby absorbing an impact force. Rubber pieces 63 are attached to the front end portion and the rear end portion of the guard 60 for absorbing an impact generated when the guard 60 pivots and come in contact with the lower surface of the reach rail 21.

Since the guards in Figs. 11 and 12 have the inclined portions 57a, 57b, 60a, 60b, respectively, which are inclined in the running direction, an impact force is distributed in the directions along the inclined surfaces. This increases the advantage of the guards 57, 60 which are less susceptible to deformation. Since the sensor 30 is directly fixed on the lower surface of the reach rail 21 using the bracket 54, the sensor 30 is held at its mounted position without affected by displacement or deformation of the guard 57, 60. Thus, a high detection accuracy of the rotation sensor 30 is maintained. It should be noted that a mechanism for displacing the guard 57, 60 may be modified as appropriate in place of the springs 58, 62 or the shaft 61.

A guard 65 may be made of a metal plate or the like which is bent into a shape as illustrated in Fig. 13, and fixed on the lower surface of the reach rail 21 with three bolts 41. In addition to two bolts 41 for supporting an inverted arch portion having inclined portions 65a, 65b and a center bottom portion, an additional bolt 41 stops a support 65c of the guard 65 together with one of the two bolts 41. A bracket 66 is welded on the support 65c. The sensor 30 is fixed to the support 65c through the bracket 66. In other words, the guard 65 also serves as an attachment bracket. However, since the inclined portions 65a, 65b are less susceptible to deformation due to an obstacle, the position of the sensor 30 is hardly shifted, thereby making it possible to maintain a high detection accuracy for the rotational speed.

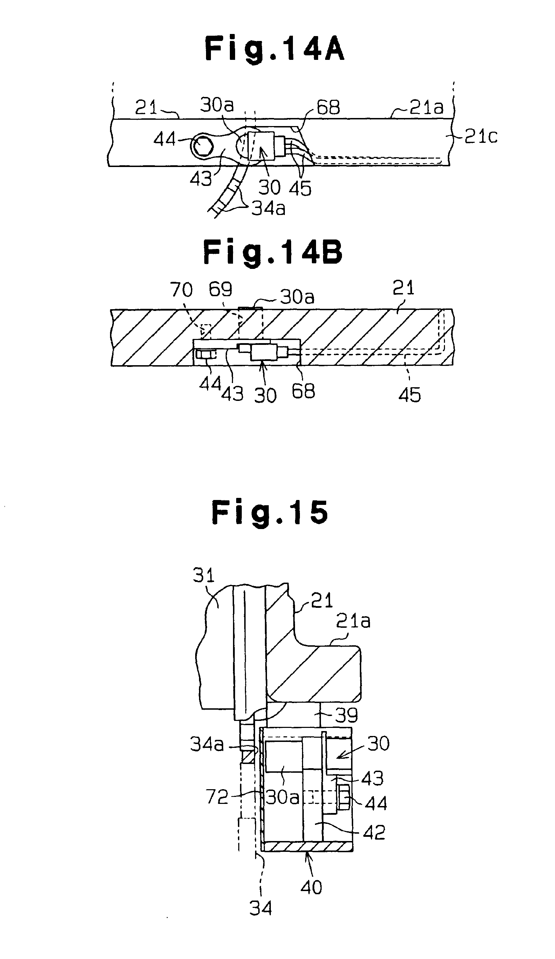

The sensor 30 may be positioned above the lower surface of the reach rail 21. Fig. 14A illustrates a side view of a rotation detector in another embodiment, and Fig. 14B illustrates a plan sectional view of the rotation detector in Fig. 14A. The sensor 30 may be embedded in the reach rail 21 below a guide surface 21a for guiding the running of the rollers 20a. A bottom portion 21c of the reach rail 21 positioned below the guide surface 21a is formed with a recess 68 for mounting the rotation sensor 30 in an inner side thereof. From a side wall of the recess 68, an assembling hole 69 and a threaded hole 70 extend (see Fig. 14B). The sensor 30 is mounted to the reach rail 21 by screwing the bolt 44 inserted through the attachment bracket 43 into the threaded hole 70, with the sensor portion 30a accommodated in the assembling hole 70. The attachment bracket 43 is accommodated in the recess 68. In this way, the sensor 30 is positioned substantially within the width of the reach rail 21 without protruding from the lower surface of the reach rail 21. A running range is ensured for the rollers 20a, and the rollers 20a will not interfere with the sensor 30. The sensor 30 will not be wound with a foreign object such as a rope, and is protected from obstacles on the floor surface R as well. Since the reach rail 21 itself serves as a guard, the separate guard is not required.

As illustrated in Fig. 15, a cover 72 for protecting the sensor portion 30a may be provided for an open side surface of a guard 40 (guard 55, 57, 60, 65, 74, 76, 78 in other embodiments) . The cover 72 may be made of a magnetically permeable resin which hardly affects the detection accuracy for the rotational speed. According to this structure, even if the sensor portion 30a slightly protrudes into the gap G between the reach rail 21 and the front wheel 11, the sensor 30a is protected by the cover 72. The cover 72 is not limited to a flat plate shape but may be formed, for example, in a cap shape.

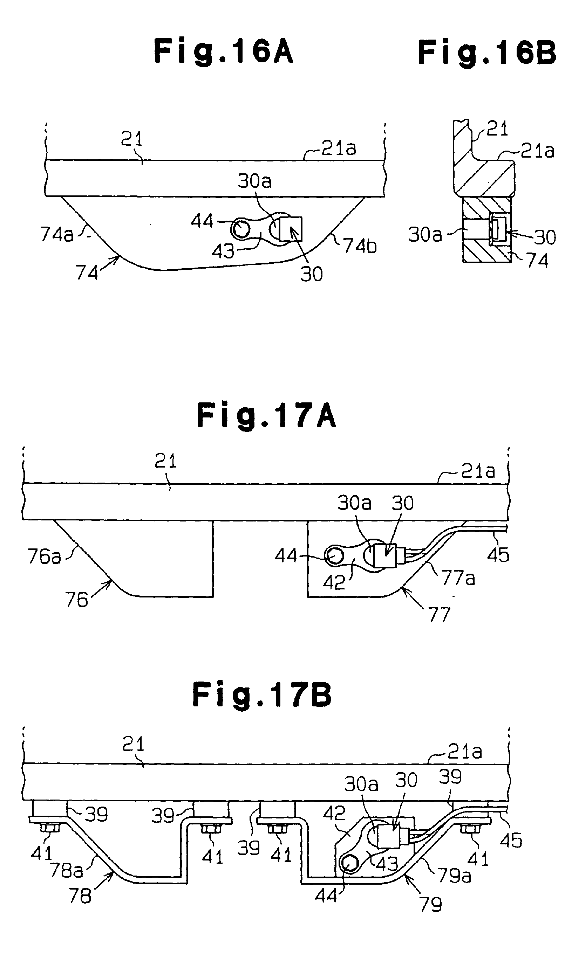

The guard may be formed of a material other than a plate material. As illustrated in Fig. 16A, a guard 74 included of a block made of a metal in a predetermined shape may be welded on the lower surface of the reach rail 21, and the sensor 30 may be embedded in the guard 74. The guard 74 is formed with inclined portions 74a, 74b on the front and rear surfaces which are inclined in the running direction. The inclined portions 74a, 74b function to relax an impact applied to the vehicle, when an obstacle collides with the vehicle, rather than to prevent the guard 74 from deformation. As illustrated in Fig. 16B, the sensor 30 is also located within the width of the reach rail 21 in this structure. The guard 74 formed of a metal is less likely to experience the deformation, contributing to a reduction in erroneous detection due to a displacement of the sensor 30.

The guard may be divided into a front inclined portion and a rear inclined portion. As illustrated in Fig. 17A, two guards each included of a metal block, i.e., a front guard 76 and a rear guard 77 are located on the lower surface of the reach rail 21. The sensor 30 is embedded in the rear guard 77 such that it is positioned within the width of the reach rail 21. Each of the guards 76, 77 is formed with an inclined portion 76a, 77a respectively which is inclined in the running direction. Alternatively, as illustrated in Fig. 17B, a front guard 78 and a rear guard 79 fabricated by bending a metal plate material into an inverted arch shape may be located on the lower surface of the reach rail 21. The sensor 30 is mounted to the bracket 42 welded on the rear guard 79. Each of the guards 78, 79 is formed with an inclined portion 78a, 79a respectively in the running direction. According to the guards 76, 77 in Fig. 17A, the total weight of the guards can be reduced by a reduction in volume of the spacing between the guards 76, 77. According to the guards 76, 77 in Fig. 17A or the guards 78, 79 in Fig. 17B, the position of the sensor 30 will not be shifted even if the front guard 76, 78 is deformed.

The guard may be formed in a box shape or in a casing shape. When the brake device 38 as illustrated in Fig. 4 is equipped, an outer side plate of a box-shaped guard may be formed with a throughhole for the hydraulic pipe line 38a to pass therethrough, or the entire outer surface of the box-shaped guard opposing the front wheel 11 may be opened for routing the hydraulic pipe line 38a within the guard. The box-shaped guard can protect the sensor 30 from a foreign object from the inner side as well as contributes to an improved strength.

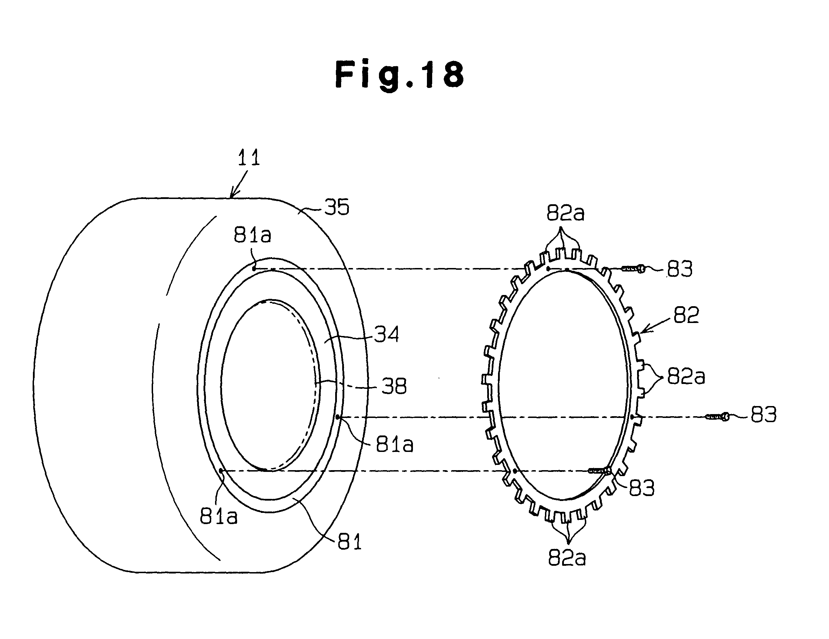

The detectable portion may be separate parts in place of the protrusions 34a integral with the wheel 34. For example, as illustrated in Fig. 18, on a cylindrical tire base 81 on which the tire 35 is fitted, a metal ring plate 82 having substantially the same diameter as the tire base 81 is mounted in the front wheels 11. The ring plate 82 is integrally mounted to the inner side of the tire base 81 by screwing a plurality of bolts 83 into associated threaded holes 81a, respectively. The ring plate 82 is formed on the outer periphery with toothing 82a at a constant pitch, and protrusions, i.e., teeth 82a function as the detectable portion.

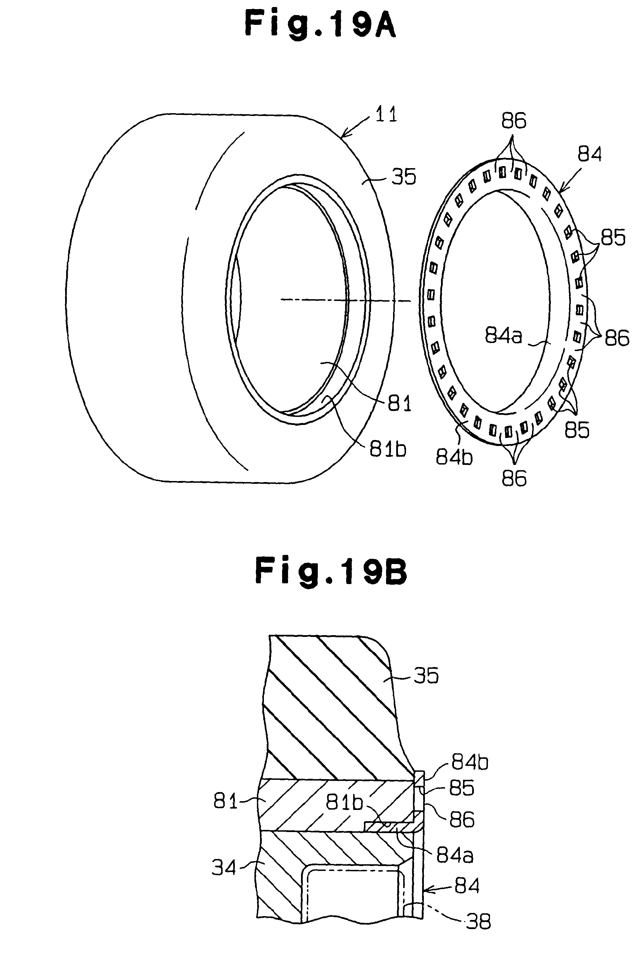

Alternatively, as illustrated in Fig. 19A, a metal ring plate 84 may have a cylinder portion 84a, and a flange 84b which is bent from the cylinder portion 84a to extend outward in the radial direction. The flange 84b is formed with a large number of holes 85 at a constant pitch in the circumferential direction, and lands 86 between the holes 85 function as the detectable portion. The ring plate 84 is press fit into an annular recess 81b which is difined by the circumferential wall of the wheel 11. In Fig. 18, the teeth 82a are relatively susceptible to deformation due to an external force, whereas in Fig. 19, the lands 86 are invulnerable since the peripheral edge of the ring plate 84 is continuous. For this reason, the detectable portion is less susceptible to deformation, thereby providing a stable detection accuracy of the rotation sensor 30 for a long term. Also, a single wheel 34 can be used in either of the embodiments of Figs. 18 and 19. Further, to such an extent that the assembly of the brake device 38 to the front wheel 11 is not prevented, the ring plate 82 in Fig. 18 may be formed with toothing on the inner periphery, or the flange 84b of the ring plate 84 in Fig. 19 may be extended toward the inside so that the detectable portions 82a, 86 can be positioned closer to the axis of the front wheels 11.

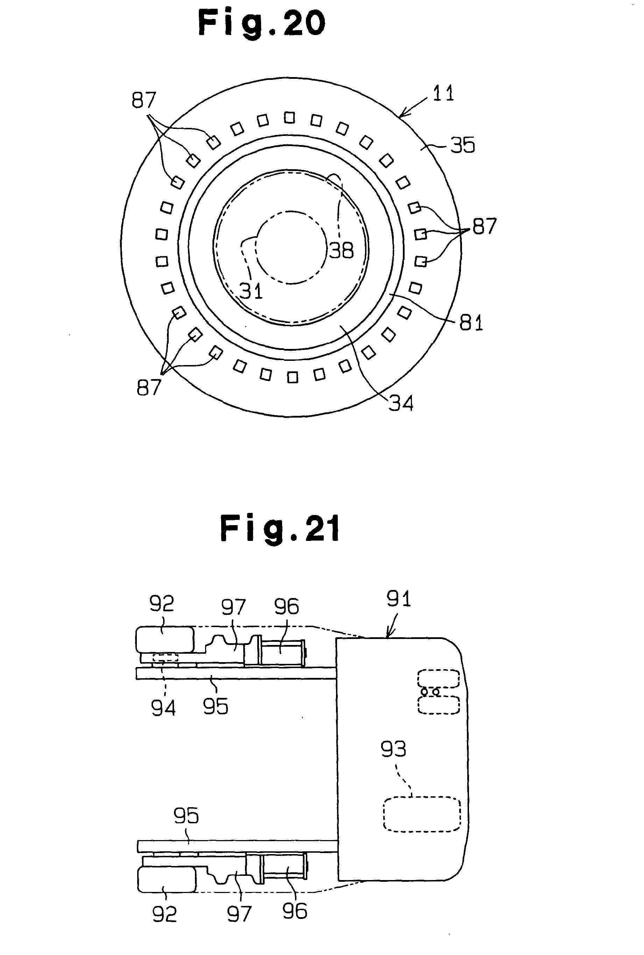

As illustrated in Fig. 20, metal pins 87 may be implanted into the inner side of the tire 35 at a constant pitch in the circumferential direction so that heads of the respective pins 87 are used as the detectable portion.

When the detectable portion is formed integrally with the wheel 11, toothing may be formed integrally on the side surface of a tire base 81 such that protrusions are used as the detectable portion in place of the protrusions 34a formed on the wheel 34.

The guard is not limited to the structure for covering the lower side of the sensor. For example, only two blocks may be located in front of and behind the sensor for avoiding obstacles. Further, the guard need not be positioned near the sensor but may be attached anywhere as long as it can protect the sensor from obstacles on the floor surface R when the vehicle is running. Furthermore, it is not essential that the guard protects the sensor both in front of and behind the sensor. For example, if the sensor is protected by the tire cover 37 from obstacles on the floor surface R when the vehicle is running forward, the guard may only be required to protect the sensor at the back thereof.

The rotation detector may be applied to a reach forklift truck of a three-wheel drive type which uses front wheels as drive wheels. In this event, a reach rail has a gear box for driving a front wheel. The gear box is fixed on the outside of the reach rail and opposes the front wheel at the inside thereof. A sensor is attached on the lower surface of the gear box. If the sensor is protected by a guard, or if the sensor is spaced from the front wheel by such a gap that allows a foreign object such as a rope to pass therethrough, similar advantages as those in the foregoing embodiments can be provided as well in a reach forklift truck of front wheel driving type.

The rotation detector may be applied to a reach forklift truck which has two rear drive wheels, or may be applied to a reach cargo vehicle which includes a cargo carrying apparatus other than the reach forklift truck.

The sensor 30 may be maintained in a state in which it does not virtually interfere with obstacles on the floor surface R. Therefore, the structure of the sensor 30 is not limited to the provision of a guard around the sensor 30, and positioning of the sensor 30 within the reach rail 21. For example, when the vehicle is running forward, the tire cover 37 extending downward over a sufficient length from the lower surface of the reach rail 21 protects the sensor 30 attached to the lower surface of the reach rail 21 from obstacles on the floor surface R. On the other hand, when the vehicle is running backward, the vehicle body 14 having the bottom positioned lower than the sensor 30 protects the rotation sensor 30 from obstacles on the floor surface R. The sensor 30 is protected by the tire cover 37 and the vehicle body 14 which are generally provided in the reach forklift truck, so that the guard can be eliminated. Also, the guard can be eliminated when the sensor 30 is protected by other structural materials than the tire cover 37 and the vehicle body 14. The "protected state" used in this disclosure means that the sensor 30 is located at a position at which the sensor 30 is virtually prevented from interfering with obstacles on the floor surface R not only by the guard but also by a particularly assembled structure of the sensor 30 (including embedding into the reach leg) and members generally equipped in the reach cargo vehicle (for example, the tire cover 37 of the reach leg 15 and the vehicle body 14).

The gap between the front wheel 11 and the sensor 30 is not limited to such a dimension that allows a foreign object such as a rope wound around the axle 31 to pass therethrough. For example, the sensor 30 may protrude from the side surface of the reach rail 21 into the gap G between the front wheel 11 and the reach rail 21 so that the distance between the front wheel 11 and the sensor 30 is not actually provided. Troubles due to a foreign object such as a rope can be prevented when the sensor 30 is protected by a guard or the guard is provided with the cutter 48. If the guard does not function as a attachment bracket for the sensor 30, and the sensor 30 is directly attached to the reach rail 21, the sensor 30 is held at a correct position, even supposing that the guard is slightly shifted in position due to a foreign object such as a rope possibly getting caught with the guard.

The sensor 30 may be provided only on one of the right and left front wheels 11. With the single sensor 30, a detected rotational speed of the front wheel 11 would be affected by a direction in which the vehicle turns (a different detected value is indicated depending on whether the sensor is attached to the inner wheel or to the outer wheel). However, if a steering angle (tire angle) of the drive wheel 12 is detected, for example, by a tire angle sensor and corrected, a converted follower wheel vehicle speed can be correctly calculated even only from the rotational speed of the front wheel 11 detected at the preceding time. It is therefore possible to correctly detect slippage of the drive wheel 12.

The right and left sensors 30 may be selectively used in accordance with a vehicle running state. A rotational speed detected from one of the right and left sensors 30 may only be used in accordance with the vehicle running state. For example, as a method of calculating the converted follower wheel vehicle speed, only a rotational speed of the front wheel 11, which is the outer wheel when the vehicle turns, determined in accordance with a steering angle detected by the tire angle sensor, may be used in place of an average value of rotational speeds of the right and left front wheels 11. In this event, a larger detected value is provided by employing the rotational speed of the outer wheel, thus improving the accuracy of the speed (follower wheel conversion vehicle speed or rear wheel position conversion speed) which is calculated based on the detected value.

The sensor 30 is not limited to the type which uses a Hall element. Any other type of magnetic sensor may be used as long as it can detect information related to the detectable portion. The detectable portion may be implemented by magnets attached to the front wheel 11. In addition, the sensor 30 is not limited to the type which utilizes the magnetism, but may be any type of sensor which detects information on the detectable portion of the front wheel 11 in accordance with another technique in a contact manner or in a non-contact manner. For example, the sensor 30 attached to the axle 31 as illustrated in Fig. 9 may be a contact-type sensor. For example, a roller may be arranged such that it is attached to the internal circumferential wall of the wheel 34 and rotates. The rotation of the roller may be detected by an encoder supported by the axle 31.

The type of control conducted for the reach forklift truck using a value detected by the sensor 30 is not limited to the ABS control and the turn stabilization control. For example, a TRC control may be conducted.

The restricting surfaces for restricting right and left swing of the forks 24 are not limited to the inner walls 21b of the reach rails 21. For example, another auxiliary element is fixed to the inside of each reach rail, with the inner side of the auxiliary element used as the restricting surface, and the sensor 30 is positioned such that it does not protrude from the inner side of the auxiliary element. In essence, the restricting surfaces may be formed of any members as long as they can restrict the forks 24 swinging to the right and left to prevent it from interfering with the sensor 30. For example, the restricting *surfaces* may be implemented by the inner sides of the guard which protrude to the inside of the reach rail 21 for protecting the sensor 30. When the guard does not function as a bracket for the sensor 30, the sensor 30 is held at the correct position even if the fork 24 strikes against the guard to result in a shift in position of the guard.

Therefore, the present examples and embodiments are to be considered as illustrative and not restrictive and the invention is not to be limited to the details given herein, but may be modified within the scope and equivalence of the appended claims.

Reach rails (21) extend forward from a body of a reach forklift truck. An axle (31) is fixed to outer walls of reach rails (21). Front wheels (11) are supported by the axle (31). Protrusions (34a) are formed on the side of the wheel (34) at a constant pitch. A guard (40) is attached to the lower surface of each reach rail (21). A sensor (30) is protected by the guard (40) from objects on the floor surface. The sensor (30) detects the number of revolution of the front wheel (11) based on passage of the protrusions (34a). The sensors (30) are positioned substantially within the dimensions of the reach rail (21). Therefore, if the front wheels (11) are non-powered wheels, parts for transmitting the front wheel (11) need not be added near the front wheel (11), thereby simplifying the structure for detecting the rotation of the front wheels (11).

## Claims

1. A rotation detector for a reach cargo vehicle (10), the reach cargo vehicle (10) comprising a cargo carrying apparatus, a vehicle body (14), and a pair of reach legs (15) extending from the vehicle body (14), each of the reach legs (15) having a reach rail (21), the cargo carrying apparatus being movable along the pair of reach rails (21), and a pair of front wheels (11) being rotatably supported by an axle (31) at the outside of the reach rails (21), respectively,
the rotation detector being **characterized by**:
a sensor (30) attached to at least one of the reach legs (15); and
a detectable object formed on at least one front wheel (11) to rotate integrally with the front wheel (11), the detectable object being detected by the sensor (30) to determine the rotational speed of the front wheel (11).

2. The rotation detector according to claim 1, **characterized in that** the vehicle (10) has structural materials (14, 21, 37), and the sensor (30) is placed in a protected state from an obstacle on a floor surface by the structural members (14, 21, 37) when the vehicle (10) is running.

3. The rotation detector according to claims 1 or 2, **characterized in that** the cargo carrying apparatus has a mast assembly (20), the mast assembly (20) comprising rollers (20a), wherein the cargo carrying apparatus is moved by movements of the rollers (20a) along guide surfaces (21a) of the reach rails (21), and the sensor (30) is positioned below the guide surface (21).

4. The rotation detector according to claim 3, **characterized in that** the reach rails (21) are positioned between the pair of front wheels (11), and the sensor (30) is located below and separate from the reach rails (21).

5. The rotation detector according to claim 4, **characterized in that** the sensor (30) is attached to the reach rail (21).

6. The rotation detector according to claim 3, **characterized in that** the detector further comprises a guard (40, 55, 57, 60, 65, 74, 76, 77, 78, 79) attached to each reach rail (21) for surrounding the sensor (30).

7. The rotation detector according to claim 6, **characterized in that** the detector further comprises a guard (40, 65, 74, 76, 77, 78, 79) attached to each reach rail (21) for surrounding the sensor (30), wherein the sensor (30) is attached to the guard (40, 65, 74, 76, 77, 78, 79).

8. The rotation detector according to claim 6, **characterized in that** the guard (40, 55, 57, 60, 65, 74, 76, 77, 78, 79) comprises front and rear inclined portions (40a, 40b, 55a, 55b, 57a, 57b, 60a, 60b, 65a, 65b, 74a, 74b, 76a, 77a, 78a, 79a), the two inclined portions approaching each other in a downward direction.

9. The rotation detector according to claim 6, **characterized in that** the guard (40, 55, 57, 60, 65, 74, 76, 77, 78, 79) comprises a cutter (48) for cutting a foreign object wound around the axle (31).

10. The rotation detector according to claim 3, **characterized in that** the reach rails (21) are positioned between the pair of front wheels (11), and the sensor (30) is embedded within the reach rails (21).

11. The rotation detector according to claim 1 or 2, **characterized in that** the axle (31) connects the front wheels (11) to the reach rails (21), and the sensor (30) is located on the axle (31).

12. The rotation detector according to any of claims 1 to 10, **characterized in that** the sensor (30) is positioned substantially within the dimensions of the reach rails (21) in a lateral direction of the vehicle (10).

13. The rotation detector according to any of claims 1 to 12, **characterized in that** the cargo carrying apparatus has forks (24), the reach rails (21) have restricting surfaces (21b) for restricting swinging of the forks (24) in the lateral direction of the vehicle (10), and the sensor (30) is further away from the forks (24) than the restricting surfaces (21b).

14. The rotation detector according to any of claims 1 to 13, **characterized in that** the sensor (30) is spaced from the front wheel (11) such that a foreign object wound around the axle (31) can pass between the front wheel (11) and the sensor (30).

15. The rotation detector according to claim 14, **characterized in that** a gap (G) between the front wheel (11) and the reach rail (21) is 2mm or more, and the distance between the front wheel (11) and the sensor (30) is 2 mm or more.

16. The rotation detector according to any of claims 1 to 15, **characterized in that** the sensor (30) contains a Hall element.

17. The rotation detector according to any of claims 1 to 16, **characterized in that** the wheel (11) is braked by an auxiliary brake device (38), and information detected by the sensor (30) is used to determine whether or not to activate the auxiliary brake device (38).

18. The rotation detector according to any of claims 1 to 17, **characterized in that** the detectable object includes protrusions (34a, 82a, 86, 87) arranged on a side or an internal circumferential wall of the front wheel (11) at a constant pitch in a circumferential direction.

19. The rotation detector according to any of claims 1 to 18, **characterized in that** the detectable portion is formed directly on a side or an internal circumferential wall of the front wheel (11).

20. The rotation detector according to any of claims 1 to 18, **characterized in that** the detectable object is formed on a ring plate (82, 84) fixed to the front wheel (11).

21. The rotation detector according to any of claims 1 to 20, **characterized in that** the detectable object is made of a magnetic material, and the sensor (30) comprises a Hall element.

22. The rotation detector according to any of claims 1 to 21, **characterized in that** the front wheels (11) are follower wheels.

23. The rotation detector according to any of claims 1 to 22, **characterized in that** the detectable object is formed on each wheel (11).

24. The rotation detector according to any of claims 1 to 23, **characterized in that** the sensor (30) is attached to each reach leg (15).

25. A wheel for use in a reach cargo vehicle, the vehicle comprising the wheel, and a sensor (30) located near the wheel,
the wheel is **characterized by**:
detectable objects made of a metal and arranged on an side or an internal circumferential wall of the wheel at a constant pitch in a circumferential direction, the detectable objects being detected by the sensor (30) to determine a rotational speed of the wheel.

26. The wheel according to claim 25, **characterized in that** the wheel is a front wheel (11), and the front wheel (11) is non-powered.

27. The wheel according to claim 25, **characterized in that** the detectable objects are directly formed on a side or internal circumferential wall of the front wheel (11).

28. The wheel according to claim 25, **characterized in that** the detectable objects are formed on a ring plate (82, 84) fixed to the front wheel (11).
